# EUROPÄISCHE PATENTANMELDUNG

(11) **EP 3 754 765 A1**
(43) Veröffentlichungstag der Anmeldung: **23.12.2020**
(21) Anmeldenummer: 20176930.4
(22) Anmeldetag: 27.05.2020
(51) Int. Cl.: H01M 4/38, H01M 4/485, H01M 4/58, H01M 4/62, H01M 4/66, H01M 10/052

(54) **POLYMERELEKTROLYT-LITHIUM-ZELLE MIT FORMIERUNGSHILFSMATERIAL**

(30) Priorität: 19.06.2019 DE 102019208911
(71) Anmelder: Robert Bosch GmbH, 70442 Stuttgart (DE)
(72) Erfinder: Krauss, Elke, 70839 Gerlingen (DE); Sauter, Ulrich, 76199 Karlsruhe (DE); Berner, Ulrich, 70176 Stuttgart (DE)

(57) **Zusammenfassung**

Die vorliegende Erfindung betrifft eine Polymerelektrolyt-Lithium-Zelle (10), welche eine Anode (11), eine Kathode (12) und einen zwischen der Anode (11) und der Kathode (12) angeordneten Separator (13) umfasst. Die Anode (11) umfasst dabei metallisches Lithium. Der Separator (13) und/oder die Kathode (12) umfassen dabei mindestens einen Polymerelektrolyten. Die Kathode (12) umfasst dabei mindestens ein Lithium-Interkalations- und/oder-Insertionsmaterial mit einem Redoxpotential von ≥ 2,5 V gegen Lithium. Um eine Polymerelektrolyt-Lithium-Zelle mit einem verringerten Grenzflächenwiderstand und einer verbesserten Kapazität zur Verfügung gestellt werden, umfasst die Kathode (12) weiterhin mindestens ein Formierungshilfsmaterial, welches bei einem Potential in einem Bereich zwischen 2,5 V und 1,5 V gegen Lithium reduzierbar und mit Lithium reagierbar ist. Darüber hinaus betrifft die Erfindung eine derartige Polymerelektrolyt-Lithium-Batterie und ein Formierungsverfahren.

## Beschreibung

Die vorliegende Erfindung betrifft eine Polymerelektrolyt-Lithium-Zelle, eine Polymerelektrolyt-Lithium-Batterie und ein Formierungsverfahren.

### Stand der Technik

Elektrische Energie kann mittels Lithium-Zellen und -Batterien gespeichert werden, welche eine chemische Reaktionsenergie in elektrische Energie umwandeln. Eine Batterie kann dabei eine oder insbesondere mehrere Zellen umfassen und eine Primärbatterie oder Sekundärbatterie sein. Primärbatterien sind dabei nur einmal funktionsfähig, während Sekundärbatterien, die auch als Akkumulatoren bezeichnet werden, wieder aufladbar sind.

Lithium-Zellen, wie Lithium-Ionen-Zellen, werden insbesondere in Sekundärbatterien beziehungsweise Akkumulatoren verwendet und weisen eine Kathode, welche auch als positive Elektrode bezeichnet wird, und eine Anode, welche auch als negative Elektrode bezeichnet wird, sowie einen zwischen der Anode und der Kathode angeordneten Separator auf. Die Kathode sowie die Anode umfassen dabei jeweils ein Aktivmaterial, welches in der Regel jeweils an einem Stromableiter angebracht ist.

Bei herkömmlichen Lithium-Ionen-Zellen werden häufig Metalloxide als Kathodenaktivmaterial und Graphit, amorpher Kohlenstoff, wie so genannter Hard Carbon, Silizium und/oder Lithium-Titanat als Anodenaktivmaterial eingesetzt. Herkömmliche Lithium-Ionen-Zellen werden üblicherweise am Ende der Herstellung mit einem Flüssigelektrolyten gefüllt. Um gezielt eine Schutzschicht, eine so genannte SEI-Schicht (Englisch: Solide Electrolyte Interface/Interphase Layer), auf der Anode und gegebenenfalls auch auf der Kathode herzustellen, werden herkömmliche Lithium-Ionen-Zellen und -Batterien üblicherweise einem Formierschritt unterworfen, bei dem bestimmte Potentiale an der Anode und Kathode angelegt werden, um bestimmte Spezies im Flüssigelektrolyten vorteilhaft zu oxidieren und/oder zu reduzieren. Auf diese Weise können auch Verunreinigungen entfernt werden. Nach der Formierung können entstandenen Gase aus der Zelle entfernt und die Batterie gasdicht verschlossen. Ein derartiges Vorgehen wird beispielsweise in der Druckschrift US 2018/034097 A1 beschrieben.

Polymerelektrolyt-Lithium-Zellen umfassen mindestens einen Polymerelektrolyten. Dabei können die Kathode und/oder der Separator den mindestens einen Polymerelektrolyten umfassen. Auch hierbei kann eine Art Formierung, welche auch als Vorentladung beziehungsweise Predischarge bezeichnet wird, durchgeführt werden. Die Formierung wird hierbei üblicherweise dadurch durchgeführt, dass an der Kathode das Potential schrittweise oder linear bis auf unter 1,5 V verringert wird. Dadurch können Verunreinigungen, wie Wasser und/oder Lösungsmittelreste, an der Kathode zu gasförmigen Spezies reduziert und auf diese Weise entfernt werden. Die reduzierenden Reaktionen an der Kathode verbrauchen dabei Lithium, welches von der Anode durch Oxidation von metallischem Lithium zu Lithiumionen (Li⁺) entfernt wird. Im Fall einer metallisches Lithium umfassenden Anode, beispielsweise einer Lithiummetall-Anode, zum Beispiel in Form einer Lithiummetallfolie, können dabei die obersten Schichten der Anode abgetragen und dadurch eine "frische" Metalloberfläche generiert werden. Bei zu niedrigen Potentialen können jedoch unerwünschte Reaktionen in der Zelle auftreten.

Die Druckschrift US 2018/048018 A1 betrifft eine Anwendung einer Kraft auf elektrochemische Zellen.

### Offenbarung der Erfindung

Gegenstand der vorliegenden Erfindung ist eine Polymerelektrolyt-Lithium-Zelle, insbesondere eine Polymerelektrolyt-Lithium-Ionen-Zelle, welche eine Anode, eine Kathode und einen zwischen der Anode und der Kathode angeordneten Separator umfasst. Die Anode umfasst dabei metallisches Lithium. Der Separator und/oder die Kathode umfassen dabei mindestens einen Polymerelektrolyten. Die Kathode umfasst dabei mindestens ein Lithium-Interkalations- und/oder-Insertionsmaterial mit einem Redoxpotential von ≥ 2,5 V gegen, insbesondere metallisches, Lithium (Li/Li⁺).

Die Kathode umfasst dabei insbesondere weiterhin mindestens ein Formierungshilfsmaterial, welches bei einem Potential in einem Bereich zwischen 2,5 V und 1,5 V gegen, insbesondere metallisches, Lithium (Li/Li⁺), beispielsweise reversibel oder irreversibel, reduzierbar und mit Lithium reagierbar ist.

Durch ein derartiges Formierungshilfsmaterial kann vorteilhafterweise die Oberfläche der Anode gereinigt und beispielsweise eine "frische" Metalloberfläche generiert werden, ohne dass hierfür an der Kathode derart niedrige Potentiale angelegt werden müssen, dass unerwünschte Reaktionen in der Zelle, insbesondere des mindestens einen Polymerelektrolyten, beispielsweise von Polyethylenoxid (PEO), auftreten.

So können vorteilhafterweise unerwünschte Reaktionen in der Zelle, beispielsweise eine irreversible Reaktion des mindestens einen Polymerelektrolyten, zum Beispiel von Polyethylenoxid, vermieden werden.

Auf diese Weise ermöglicht das mindestens eine Formierungshilfsmaterial auch bei Potentialen von ≥ 1,5 V eine Menge an Lithium abzutragen, welche ausreichend hoch ist, um die elektrochemischen Eigenschaften der Zelle dauerhaft zu verbessern. Ohne den Zusatz des mindestens einen Formierungshilfsmaterials, konnten vergleichbar hohe Abtragungsraten bislang nur bei geringeren Potentialen, insbesondere von unter ∼1,3 V, bei welchen jedoch auch herkömmliche Polymerelektrolyte, wie Polyethylenoxid, reagieren, erzielt werden.

Durch die, insbesondere gezielte, Reinigung der Anodenoberfläche kann vorteilhafterweise der Grenzflächenwiderstand verringert und auf diese Weise die Leistungsfähigkeit der Zelle verbessert werden.

Insgesamt kann so eine Polymerelektrolyt-Lithium-Zelle mit einem verringerten Grenzflächenwiderstand und einer verbesserten Kapazität zur Verfügung gestellt werden.

Das mindestens eine Formierungshilfsmaterial ist vorzugsweise derart ausgewählt, dass bei dessen Reduktion keine oder nur sehr geringe Mengen an gasförmigen Substanzen entstehen.

Im Rahmen einer Ausführungsform ist das mindestens eine Formierungshilfsmaterial bei einem Potential in einem Bereich zwischen 2,5 V und 1,5 V gegen, insbesondere metallisches, Lithium (Li/Li⁺) reversibel reduzierbar und/oder redoxaktiv. Dadurch, dass das mindestens eine Formierungshilfsmaterial im Potentialbereich zwischen 2,5 V > U > 1,5V reversibel reduzierbar und/oder redoxaktiv ist, kann vorteilhafterweise die für das Formieren, insbesondere Vorentladen (Englisch: Predischarge), vorgehaltene Lithium-Menge auf der Anode beim nachfolgenden Ladevorgang zurück gewonnen werden. Dadurch muss kein zusätzlicher Lithium-Überschuss auf der Anode für das Formieren, insbesondere das Vorentladen (Englisch: Predischarge), vorgehalten werden, welcher über den üblichen Lithium-Überschuss zur Gewährleistung der Zyklenstabilität der Zelle hinausgeht. Darüber hinaus ermöglicht die reversible Reduzierbarkeit und/oder Redoxaktivität des mindestens einen Formierungshilfsmaterials, dass das mindestens eine Formierungshilfsmaterial als Tiefenentladungsschutz für das mindestens eine Lithium-Interkalations- und/oder-Insertionsmaterial dienen kann.

Im Rahmen einer weiteren Ausführungsform umfasst oder ist das mindestens eine Formierungshilfsmaterial mindestens ein Konversionsmaterial. Insbesondere kann das mindestens eine Formierungshilfsmaterial mindestens ein Konversionsmaterial umfassen, welches im geladenen Zustand in der Kathode verarbeitbar ist. Konversionsmaterialien können vorteilhafterweise, insbesondere bei einem Potential in einem Bereich zwischen 2,5 V und 1,5 V gegen, insbesondere metallisches, Lithium (Li/Li⁺), reversibel reduzierbar und redoxaktiv sein.

Im Rahmen einer weiteren Ausführungsform umfasst oder ist das mindestens eine Formierungshilfsmaterial, insbesondere Konversionsmaterial, Schwefel und/oder Selen und/oder Tellur und/oder mindestens ein Fluorid und/oder mindestens ein Chlorid. Diese Stoffe können als Formierungshilfsmaterial beziehungsweise Konversionsmaterial vorteilhaft sein.

Im Rahmen einer Ausgestaltung dieser Ausführungsform umfasst oder ist das mindestens eine Formierungshilfsmaterial, insbesondere Konversionsmaterial, elementaren Schwefel und/oder mindestens eine Schwefelverbindung und/oder elementares Selen und/oder mindestens eine Selenverbindung und/oder elementares Tellur und/oder mindestens eine Tellurverbindung und/oder mindestens ein Metallfluorid, insbesondere mindestens ein Übergangsmetallfluorid und/oder mindestens ein Hauptgruppenmetallfluorid, beispielsweise der 5. Hauptgruppe, und/oder mindestens ein Metallchlorid, insbesondere mindestens ein Übergangsmetallchlorid. Diese Stoffe können vorteilhaft eingesetzt werden.

Im Rahmen einer speziellen Ausgestaltung dieser Ausführungsform umfasst oder ist das mindestens eine Formierungshilfsmaterial, insbesondere Konversionsmaterial, elementaren Schwefel und/oder mindestens einen Schwefel-Polymer-Komposit, insbesondere mindestens einen Polyacrylnitril-Schwefel-Komposit, wie SPAN beziehungsweise PAN-S, und/oder elementares Selen und/oder mindestens eine Selenverbindung mit kovalent gebundenen Selenketten, beispielsweise Selenseitenketten, und/oder elementares Tellur und/oder mindestens eine Tellurverbindung mit kovalent gebundenen Tellurketten, beispielsweise Tellurseitenketten, und/oder mindestens ein Eisenfluorid, zum Beispiel Eisen(II)fluorid (FeF₂) und/oder Eisen(III)fluorid (FeF₃), und/oder Vanadiumfluorid, zum Beispiel Vanadium(III)fluorid (VF₃), und/oder Manganfluorid, zum Beispiel Mangan(III)fluorid (MnF₃), und/oder Titanfluorid, zum Beispiel Titan(III)fluorid (TiF₃), und/oder Bismutfluorid, zum Beispiel Bismut(III)fluorid (BiF₃), und/oder Kupferfluorid, zum Beispiel Kupfer(II)fluorid (CuF₂), und/oder mindestens ein Manganchlorid, zum Beispiel Mangan(II)chlorid (MnCl₂), und/oder Silberchlorid, zum Beispiel Silber(I)chlorid (AgCl), und/oder Kupferchlorid, zum Beispiel Kupfer(II)chlorid (CuCl₂).

Die Kathode kann insbesondere ein Kathodenmaterial, welches auch als Kathodenmischung bezeichnet werden kann, umfassen.

Im Rahmen einer weiteren Ausführungsform umfasst das Kathodenmaterial mindestens einen Polymerelektrolyten.

Im Rahmen einer weiteren Ausführungsform umfasst das Kathodenmaterial das mindestens eine Lithium-Interkalations- und/oder -Insertionsmaterial und das mindestens eine Formierungshilfsmaterial.

Weiterhin kann die Kathode einen Kathodenstromableiter umfassen.

Im Rahmen einer weiteren Ausführungsform ist der Kathodenstromableiter mit einer Beschichtung versehen, welche das mindestens eine Formierungshilfsmaterial umfasst. Der Kathodenstromableiter kann dabei insbesondere auf einer dem Kathodenmaterial zugewandten Seite mit der das mindestens eine Formierungsmaterial umfassenden Beschichtung versehen sein.

Im Rahmen einer weiteren Ausführungsform umfasst oder ist das mindestens eine Lithium-Interkalations- und/oder-Insertionsmaterial mindestens ein Lithium-Eisen-Phosphat (LFP) und/oder Lithium-Nickel- und/oder -Cobalt- und/oder - Mangan-Oxid, insbesondere Lithium-Nickel-Cobalt-Mangan-Oxid (NCM), und/oder Lithium-Cobalt-Aluminium-Oxid (NCA) und/oder mindestens ein Lithium-Übergangsmetall-Spinell, insbesondere Lithium-Mangan-Spinell. Derartige Lithium-Interkalations- und/oder -Insertionsmaterialien können vorteilhafterweise bei Potentialen von ≥ 2,5 V gegen, insbesondere metallisches, Lithium (Li/Li⁺) redoxaktiv sein.

Im Rahmen einer weiteren Ausführungsform ist die Anode eine Lithiummetall-Anode. Unter einer Lithiummetall-Anode kann insbesondere eine Anode verstanden werden, welche aus metallischem Lithium beziehungsweise Lithiummetall ausgebildet ist. Zum Beispiel kann die Anode, insbesondere Lithiummetall-Anode, in Form einer Lithiummetallfolie ausgebildet sein.

Im Rahmen einer weiteren Ausführungsform umfasst der mindestens eine Polymerelektrolyt des Separators und/oder der mindestens eine Polymerelektrolyt der Kathode, insbesondere des Kathodenmaterials, mindestens ein Polyalkylenoxid, beispielsweise Polyethylenoxid.

Das mindestens eine Formierungshilfsmittel kann beispielsweise mittels klassischer Methoden der analytischen Chemie, wie Massenspektrometrie, Chromatografie und/oder Elementaranalyse nachgewiesen werden.

Hinsichtlich weiterer technischer Merkmale und Vorteile der erfindungsgemäßen Zelle wird hiermit explizit auf die Erläuterungen im Zusammenhang mit der erfindungsgemäßen Batterie, dem erfindungsgemäßen Verfahren sowie auf die Figuren und die Figurenbeschreibung verwiesen.

Ein weiterer Gegenstand der Erfindung ist eine Polymerelektrolyt-Lithium-Batterie, insbesondere eine Polymerelektrolyt-Lithium-Ionen-Batterie, welche mindestens eine erfindungsgemäße Zelle umfasst. Insbesondere kann die Polymerelektrolyt-Lithium-Batterie mehrere erfindungsgemäße Zellen umfassen.

Die erfindungsgemäße Zelle und/oder Batterie kann beispielsweise in Anwendungsfeldern, wie Elektromobilität, zum Beispiel in Kraftfahrzeugen, insbesondere in Elektrofahrzeugen (EV; Englisch: Electric Vehicle) und/oder Hybridfahrzeugen (HEV; Englisch: Hybride Electric Vehicle) und/oder in Plug-In-Hybridfahrzeugen (PHEV; Englisch: Plug-In-Hybride Electric Vehicle) und/oder in Telekommunikationselektronik und/oder in Haushaltsgeräten und/oder in Werkzeugen und/oder in Gartengeräten verwendet werden.

Hinsichtlich weiterer technischer Merkmale und Vorteile der erfindungsgemäßen Batterie wird hiermit explizit auf die Erläuterungen im Zusammenhang mit der erfindungsgemäßen Zelle, dem erfindungsgemäßen Verfahren sowie auf die Figuren und die Figurenbeschreibung verwiesen.

Ferner betrifft die Erfindung ein Verfahren zur Formierung einer erfindungsgemäßen Polymerelektrolyt-Lithium-Zelle und/oder -Batterie, in dem, insbesondere vor einem Zyklieren, das Potential an der Kathode schrittweise oder linear bis ≥ 1,5 V verringert wird. Die Formierung kann insbesondere bei einer Temperatur von ≥ 70 °C, beispielsweise von ≥ 75 °C, zum Beispiel von ≥ 80 °C, durchgeführt werden. Zum Beispiel kann die Zelle in einem geschlossenen Zustand oder in einem geöffneten Zustand formiert werden. Insbesondere kann die Zelle in einem geschlossenen Zustand formiert werden.

Hinsichtlich weiterer technischer Merkmale und Vorteile des erfindungsgemäßen Verfahrens wird hiermit explizit auf die Erläuterungen im Zusammenhang mit der erfindungsgemäßen Zelle, der erfindungsgemäßen Batterie sowie auf die Figuren und die Figurenbeschreibung verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine Ausführungsform einer erfindungsgemäßen Polymerelektrolyt-Lithium-Zelle;
- Fig. 2: einen Graphen zur Veranschaulichung der Abhängigkeit der Lithium-Abtragung vom der Endspannung beim Formieren einer Zelle;
- Fig. 3: einen Graphen zur Veranschaulichung der Abhängigkeit der Lithium-Abtragung und des Übergangswiderstands beziehungsweise der Kapazität von der Zeit beim Formieren von Zellen; und
- Fig. 4: einen Graphen zur Veranschaulichung des Grenzflächenwiderstandes von formierten Zellen.

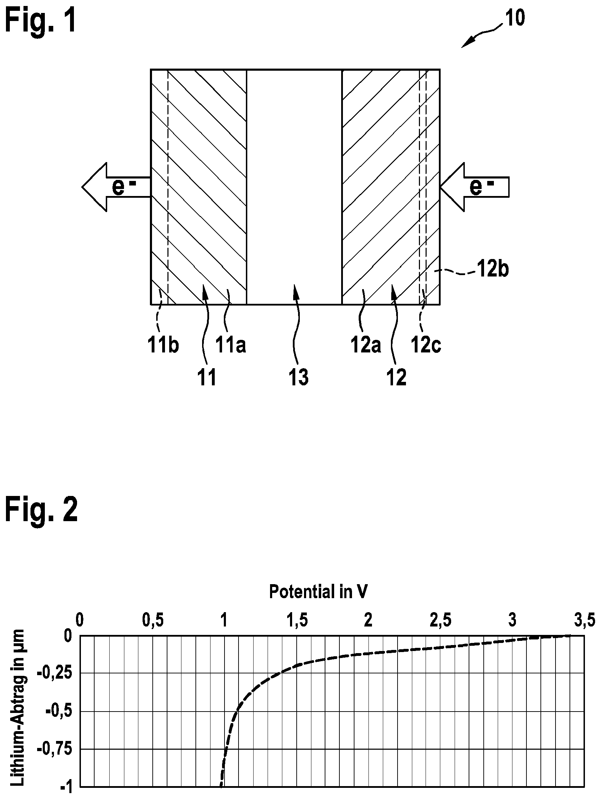

Figur 1 zeigt eine Ausführungsform einer Polymerelektrolyt-Lithium-Zelle 10 zu Beginn einer Formierung, insbesondere Vorentladung (Englisch: Predischarge). Figur 1 zeigt, dass die Zelle 10 eine Anode 11, eine Kathode 12 und einen zwischen der Anode 11 und der Kathode 12 angeordneten Separator 13 umfasst.

Die Anode 11 umfasst dabei metallisches Lithium als Anodenmaterial 11a. Zum Beispiel kann die Anode 11 dabei eine Lithiummetall-Anode, beispielsweise in Form einer Lithiummetallfolie, sein. Das mit dem Bezugszeichen 11b gekennzeichnete, gestrichelte Rechteck deutet dabei an, dass die Anode 11 weiterhin einen Anodenstromableiter 11b umfassen kann.

Die Kathode 12 umfasst dabei ein Kathodenmaterial 12a. Das Kathodenmaterial 12a kann insbesondere mindestens ein Lithium-Interkalations- und/oder-Insertionsmaterial mit einem Redoxpotential von ≥ 2,5 V gegen Lithium (Li/Li⁺) umfassen. Zum Beispiel kann das mindestens eine Lithium-Interkalations- und/oder -Insertionsmaterial Lithium-Eisen-Phosphat (LFP) umfassen oder sein. Darüber hinaus kann das Kathodenmaterial 12a mindestens einen Polymerelektrolyten, beispielsweise Polyethylenoxid, umfassen.

Das mit dem Bezugszeichen 12b gekennzeichnete, gestrichelte Rechteck deutet dabei an, dass die Kathode 12 weiterhin einen Kathodenstromableiter 12b umfassen kann. Das mit dem Bezugszeichen 12c gekennzeichnete, gestrichelte Rechteck deutet dabei an, dass die Kathode 12 weiterhin eine auf dem Kathodenstromableiter 12b aufgebrachte Beschichtung 12c umfassen kann. Figur 1 zeigt, dass dabei der Kathodenstromableiter 12b insbesondere auf einer dem Kathodenmaterial 12a zugewandten Seite mit der Beschichtung 12c versehen sein kann.

Der Separator 13 kann ebenfalls mindestens einen Polymerelektrolyten, beispielsweise Polyethylenoxid, umfassen. Dabei kann der mindestens eine Polymerelektrolyt des Separators 13 gleich oder unterschiedlich zu dem mindestens einen Polymerelektrolyten der Kathode 12, insbesondere des Kathodenmaterials 12a, sein.

Die Kathode 12 umfasst weiterhin mindestens ein Formierungshilfsmaterial, welches bei einem Potential in einem Bereich zwischen 2,5 V und 1,5 V gegen Lithium (Li/Li⁺), beispielsweise reversibel oder irreversibel, reduzierbar und mit Lithium reagierbar ist. Dabei kann das mindestens eine Formierungshilfsmaterial insbesondere bei einem Potential in einem Bereich zwischen 2,5 V und 1,5 V gegen Lithium (Li/Li⁺) reversibel reduzierbar und/oder redoxaktiv sein. Das mindestens eine Formierungshilfsmaterial kann insbesondere ein Konversionsmaterial, beispielsweise Schwefel und/oder Selen und/oder Tellur und/oder mindestens ein Fluorid und/oder mindestens ein Chlorid, umfassen.

Im Rahmen einer Ausgestaltung umfasst das Kathodenmaterial 12a das mindestens eine Lithium-Interkalations- und/oder -Insertionsmaterial und das mindestens eine Formierungshilfsmaterial.

Im Rahmen einer anderen, alternativen oder zusätzlichen Ausgestaltung umfasst die Beschichtung 12c auf dem Kathodenstromableiter 12b das mindestens eine Formierungshilfsmaterial.

Eine derartige Zelle 10 kann im neu zusammengebauten Zustand eine Zellspannung von ∼3,25 V aufweisen. Bei der Formierung, insbesondere Vorentladung (Englisch: Predischarge), der frischen Zelle 10 wird das Potential an der Kathode 12, insbesondere vor dem Zyklieren, linear oder in Stufen bis ≥ 1,5 V abgesenkt. Bei der Formierung können dabei bei bestimmten Potentialen an der Kathode 12 unterschiedliche Reaktionen, wie eine Reduktion von Wasser bei einem Potential von < 2,5 V und/oder eine Reduktion von Lösungsmittel, beispielsweise Cyclohexanon bei einem Potential von < 1,8 V, ablaufen. Je mehr und stärker diese Reaktionen an der Kathode 12 ablaufen, umso mehr Lithium wird dabei an der Anode 11 abgetragen. Die Pfeile e⁻ kennzeichnen dabei die Stromrichtung bei der Formierung, insbesondere Vorentladung (Englisch: Predischarge).

Figur 2 zeigt einen gemessenen Verlauf der Lithium-Abtragung in Mikrometern bei einer Lithium/Lithium-Eisen-Phosphat-Zelle (Li/LFP) ohne Formierungshilfsmaterial bei einer stufenweisen herkömmlichen Formierung, insbesondere Vorentladung (Englisch: Predischarge), als Funktion von der Endspannung in Volt.

Figur 2 veranschaulicht, dass eine herkömmliche Formierung üblicherweise erst beim Erreichen von 1,1 V beendet wird. Dadurch kann an der Anode eine Lithiumabtragung von bis zu etwa 0,5 µm erzielt werden.

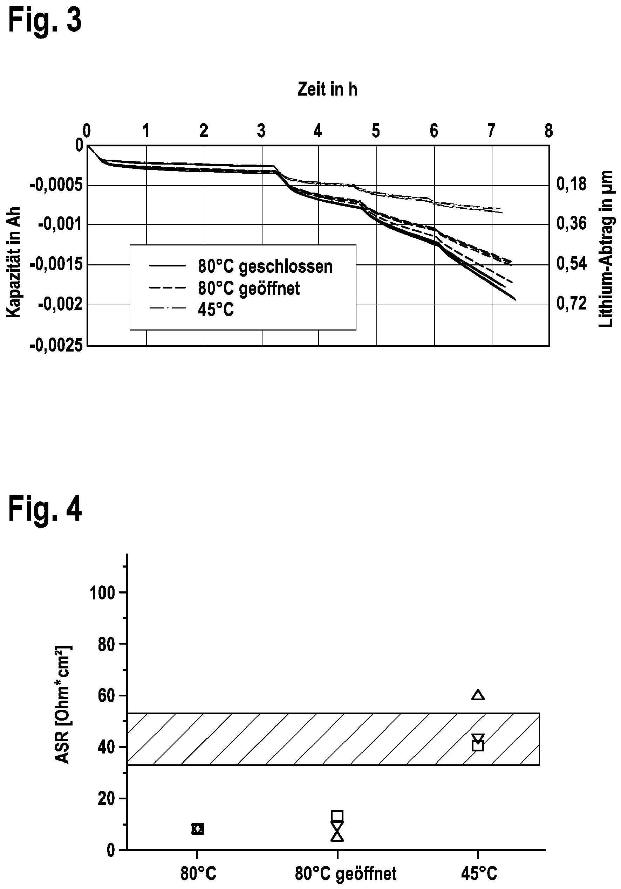

In Figur 3 ist bei einer etwa siebenstündigen Formierung, insbesondere Vorentladung (Englisch: Predischarge), bei unterschiedlichen Temperaturen, nämlich bei 45 °C und bei 80 °C, und bei identischen Potentialabsenkungen, insbesondere in vier Stufen, die Lithium-Abtragung in Mikrometern (rechte y-Achse) und der Übergangswiderstand beziehungsweise die damit einhergehende Kapazität in Amperstunden (linke y-Achse) gegen die Zeit in Stunden (x-Achse) dargestellt.

Figur 3 zeigt, dass bei 80 °C sowohl bei geöffneten als auch bei geschlossenen Zellen zwischen 0,7 µm und 0,5 µm, jedoch bei 45 °C nur etwa 0,3 µm an Lithium abgetragen wurden.

Figur 3 zeigt weiterhin, dass der Übergangswiderstand desto niedriger beziehungsweise die damit einhergehende Kapazität desto höher ist, je mehr Lithium abgetragen wurde. Durch eine Formierung bei 80 °C konnte dabei sowohl bei geschlossenen als auch bei offenen Zellen ein deutlich geringerer Übergangswiderstand beziehungsweise eine deutlich höhere Kapazität als bei 45 °C erzielt werden. Durch eine Formierung bei 80 °C von geschlossenen Zellen konnten dabei die besten Ergebnisse erzielt werden.

Figur 4 zeigt, dass der Übergangswiderstand (ASR) von bei 80 °C sowohl im geschlossenen als auch im offenen Zustand formierten Zellen deutlich geringerer als der Übergangswiderstand von bei 45 °C formierten Zellen als auch von unbehandelten Zellen (grauer Balken) ist.

## Patentansprüche

1. Polymerelektrolyt-Lithium-Zelle (10), umfassend eine Anode (11), eine Kathode (12) und einen zwischen der Anode (11) und der Kathode (12) angeordneten Separator (13),
wobei die Anode (11) metallisches Lithium umfasst,
wobei der Separator (13) und/oder die Kathode (12) mindestens einen Polymerelektrolyten umfasst und
wobei die Kathode (12) mindestens ein Lithium-Interkalations- und/oder - Insertionsmaterial mit einem Redoxpotential von ≥ 2,5 V gegen Lithium umfasst,
wobei die Kathode (12) weiterhin mindestens ein Formierungshilfsmaterial umfasst, welches bei einem Potential in einem Bereich zwischen 2,5 V und 1,5 V gegen Lithium reduzierbar und mit Lithium reagierbar ist.

2. Polymerelektrolyt-Lithium-Zelle (10) nach Anspruch 1, wobei das mindestens eine Formierungshilfsmaterial bei einem Potential in einem Bereich zwischen 2,5 V und 1,5 V gegen Lithium reversibel reduzierbar und/oder redoxaktiv ist.

3. Polymerelektrolyt-Lithium-Zelle (10) nach Anspruch 1 oder 2, wobei das mindestens eine Formierungshilfsmaterial mindestens ein Konversionsmaterial umfasst oder ist.

4. Polymerelektrolyt-Lithium-Zelle (10) nach einem der Ansprüche 1 bis 3, wobei das mindestens eine Formierungshilfsmaterial, insbesondere das mindestens eine Konversionsmaterial, Schwefel und/oder Selen und/oder Tellur und/oder mindestens ein Fluorid und/oder mindestens ein Chlorid umfasst.

5. Polymerelektrolyt-Lithium-Zelle (10) nach einem der Ansprüche 1 bis 4, wobei das mindestens eine Formierungshilfsmaterial, insbesondere das mindestens eine Konversionsmaterial, elementaren Schwefel und/oder mindestens eine Schwefelverbindung und/oder elementares Selen und/oder mindestens eine Selenverbindung und/oder elementares Tellur und/oder mindestens eine Tellurverbindung und/oder mindestens ein Metallfluorid, insbesondere mindestens ein Übergangsmetallfluorid und/oder mindestens ein Hauptgruppenmetallfluorid, insbesondere der 5. Hauptgruppe, und/oder mindestens ein Metallchlorid, insbesondere mindestens ein Übergangsmetallchlorid, umfasst.

6. Polymerelektrolyt-Lithium-Zelle (10) nach einem der Ansprüche 1 bis 5, wobei das mindestens eine Formierungshilfsmaterial elementaren Schwefel und/oder mindestens einen Schwefel-Polymer-Komposit, insbesondere mindestens einen Polyacrylnitril-Schwefel-Komposit, und/oder elementares Selen und/oder mindestens eine Selenverbindung mit kovalent gebundenen Selenketten und/oder elementares Tellur und/oder mindestens eine Tellurverbindung mit kovalent gebundenen Tellurketten und/oder mindestens ein Eisenfluorid, insbesondere Eisen(II)fluorid und/oder Eisen(III)fluorid, und/oder Vanadiumfluorid, insbesondere Vanadium(III)fluorid, und/oder Manganfluorid, insbesondere Mangan(III)fluorid, und/oder Titanfluorid, insbesondere Titan(III)fluorid, und/oder Bismutfluorid, insbesondere Bismut(III)fluorid, und/oder Kupferfluorid, insbesondere Kupfer(II)fluorid, und/oder mindestens ein Manganchlorid, insbesondere Mangan(II)chlorid, und/oder Silberchlorid, insbesondere Silber(I)chlorid, und/oder Kupferchlorid, insbesondere Kupfer(II)chlorid, umfasst.

7. Polymerelektrolyt-Lithium-Zelle (10) nach einem der Ansprüche 1 bis 6, wobei die Kathode (12) ein Kathodenmaterial (12a) umfasst, wobei das Kathodenmaterial (12a) das mindestens eine Lithium-Interkalations- und/oder-Insertionsmaterial und das mindestens eine Formierungshilfsmaterial umfasst.

8. Polymerelektrolyt-Lithium-Zelle (10) nach einem der Ansprüche 1 bis 7, wobei die Kathode (12) einen Kathodenstromableiter (12b) umfasst, wobei der Kathodenstromableiter (12b) mit einer Beschichtung (12c) versehen ist, welche das mindestens eine Formierungshilfsmaterial umfasst.

9. Polymerelektrolyt-Lithium-Zelle (10) nach einem der Ansprüche 1 bis 8, wobei das Kathodenmaterial (12a) mindestens einen Polymerelektrolyten umfasst.

10. Polymerelektrolyt-Lithium-Zelle (10) nach einem der Ansprüche 1 bis 9, wobei das mindestens eine Lithium-Interkalations- und/oder-Insertionsmaterial mindestens ein Lithium-Eisen-Phosphat und/oder Lithium-Nickel- und/oder -Cobalt- und/oder -Mangan-Oxid, insbesondere Lithium-Nickel-Cobalt-Mangan-Oxid, und/oder Lithium-Cobalt-Aluminium-Oxid und/oder mindestens ein Lithium-Übergangsmetall-Spinell, insbesondere Lithium-Mangan-Spinell, umfasst oder ist.

11. Polymerelektrolyt-Lithium-Zelle (10) nach einem der Ansprüche 1 bis 10, wobei die Anode (11) eine Lithiummetall-Anode, insbesondere eine Lithiummetallfolie, ist.

12. Polymerelektrolyt-Lithium-Zelle (10) nach einem der Ansprüche 1 bis 11, wobei der mindestens eine Polymerelektrolyt des Separators (13) und/oder der mindestens eine Polymerelektrolyt der Kathode (12), insbesondere des Kathodenmaterials (12a), mindestens ein Polyalkylenoxid, insbesondere Polyethylenoxid, umfasst.

13. Polymerelektrolyt-Lithium-Batterie, umfassend mindestens eine Zelle nach einem der Ansprüche 1 bis 12.

14. Verfahren zur Formierung einer Polymerelektrolyt-Lithium-Zelle (10) und/oder -Batterie nach einem der Ansprüche 1 bis 13, in dem, insbesondere bei einer Temperatur von ≥ 70 °C, das Potential an der Kathode (12) schrittweise oder linear bis ≥ 1,5 V verringert wird.
